# EUROPÄISCHE PATENTSCHRIFT

(11) **EP 1 744 849 B1**
(45) Veröffentlichungstag und Bekanntmachung des Hinweises auf die Patenterteilung: **01.08.2007**
(21) Anmeldenummer: 06724414.5
(22) Anmeldetag: 19.04.2006
(51) Int. Cl.: B23K 9/133

(54) **DRAHTSPULENBREMSE**
WIRE SPOOL BRAKE
FREIN BOBINE

(30) Priorität: 26.04.2005 DE 102005019622
(43) Veröffentlichungstag der Anmeldung: 24.01.2007
(73) Patentinhaber: ALEXANDER BINZEL SCHWEISSTECHNIK GMBH & CO. KG, D-35418 Buseck (DE)
(72) Erfinder: SCHÄFER, Ralf, 35345 Wettenberg (DE)
(74) Vertreter: Müller, Eckhard
(86) Internationale Anmeldenummer: PCT/EP2006/003558
(87) Internationale Veröffentlichungsnummer: WO 2006/114218

(56) Entgegenhaltungen:
- GB-A- 2 085 842
- US-A- 2 338 276
- US-A- 6 064 036

## Beschreibung

### Technologischer Hintergrund

Lichtbogenschweißbrenner verfügen üblicherweise über eine Vorschubeinrichtung zur Förderung einer beim Schweißen abschmelzenden Metallelektrode. Diese ist typischerweise auf einer auswechselbaren Spule aufgewickelt und wird mittels der Vorschubeinrichtung der Stromkontaktdüse zugeführt.

Insbesondere bei einer Unterbrechung des Schweißvorganges muss dafür Sorge getragen werden, dass kein selbsttätiges Abwickeln des Schweißdrahtes von der Drahtspule erfolgt. Im Schweißbetrieb übt die Drahtvorschubeinrichtung eine Zugkraft auf die aufgewickelte Drahtelektrode aus, der zu folge die Drahtelektrodenspule in Drehungen versetzt wird. Insbesondere beim Unterbrechen des Schweißvorganges und einem damit einhergehenden Anhalten der Vorschubeinrichtung muss dafür gesorgt werden, dass die Spule keinen nennenswerten Nachlauf aufweist, der zu einem selbsttätigen und unkontrollierten Abwickeln der Drahtelektrode führen würde. Hierfür werden Drahtspulenbremsen eingesetzt.

### Stand der Technik

In der US-A-6 064 036 ist bereits eine Spulenbremse beschrieben mit einem unter Federspannung stehenden Hebelarm, dessen freies Ende in Anlagestellung mit der seitlichen Begrenzung des Spulenkörpers tritt und damit eine Reibkraft auf die Spule ausübt. Bei der Bremsvorrichtungen wirkt der Hebelarm also nur auf den Spulenrand und kann unter Umständen ein seitliches Verspringen der äußeren Spulenwicklungen beim Abwickeln der Elektrode vom Spulenkörper nicht verhindern.

So ist es gemäß der US-A-6 064 036 vorgesehen, dass die Bremseinrichtung direkt auf die Spulenwicklungen des Spulenkörpers einwirkt.

Aufgrund der direkten Anlage des Hebelarms auf die Drahtspulenwicklungen sind diese jedoch stets einer mechanischen Beanspruchung seitens des freien Endes des Hebelarms ausgesetzt, was sich nachteilig auf die Beschaffenheit der Drahtelektrode auswirken kann.

Zudem nimmt der unter einer Federspannung stehende Hebelarm, da er direkt auf die Drahtelektrodenwicklungen einwirkt, einen von der radialen Ausdehnung der Spulenwicklung abhängigen Anlagewinkel ein. Da sich der Anlagewinkel im Laufe des Abwickelns der Drahtelektrode ändert, geht dies mit einer nicht unwesentlichen Änderung der auf die Spulenwicklungen einwirkenden Reibkraft einher, so dass die durch den Hebelarm auf den Spulenkörper ausgeübte Bremskraft bei fortwährendem Abwickeln der Drahtelektrode einer Veränderung unterliegt.

Weiterhin ist aus der DE 582 747 C ein Ablaufbock mit einem festen Arm für Drahtwickelmaschinen bekannt. Der Arm dient hierbei als Träger für Lager von Hebeln, von denen einer als Bremshebel mit an seinem unteren Ende angeordneten Bremsschuh auf einer Bremsscheibe bei Drehung einer Vorratsrolle schleift. Das freie Ende des anderen Hebelarms läuft in eine Gabel aus, in welcher eine Laufrolle gelagert ist. Diese Laufrolle rollt auf den Drahtwindungen der Vorratsspule.

Weiterhin ist aus der DE 20 55 700 A eine Bremseinrichtung für frei rotierende Spulen von Abspulvorrichtungen bekannt, die einen Waage-Balken aufweist, an dessen oberen Ende ein offener Führungsring mit dem Abwickelgut in Eingriff steht. Ein unterer, kürzerer Hebelarm dieses Waage-Balkens steht über einem Bremsbacken mit einer Spule, auf welcher das Wickelgut aufgewickelt ist, in Eingriff. Abhängig vom jeweiligen Betriebszustand der Abspulvorrichtung befinden sich entweder der Bremsbacken oder der Führungsring wechselseitig in Anlagestellung mit dem Spulenkörper bzw. mit den Spulenwicklungen. Der Führungsring für das abzuspulende Wickelgut und der Bremsbacken sind zueinander fixiert.

Weiterhin ist aus der US 32 10 522 ein Lichtbogen-Schweißapparat bekannt, der eine Spulenbremse aufweist. Die Bremse ist hierbei an einem Schwenkteil befestigt, von welchem sich ein Federarm einseitig mit einer Lippe erstreckt. Dieser Federarm gelangt schließlich mit einer äußeren Felge des Spulenflansches in Eingriff und bewirkt so einen Bremseffekt.

### Aufgabe

Der Erfindung liegt demgegenüber die Aufgabe zugrunde, eine verbesserte Bremsvorrichtung für Lichtbogenschweißbrenner zu schaffen, die bei gleichförmigem Lauf der Spule eine dauerhaft gleich bleibende Bremswirkung auf die Drahtelektrodenspule ausübt und ein einfaches Auswechseln der Spule erlaubt.

### Erfindung und vorteilhafte Wirkungen

Die Aufgabe wird mit Hilfe einer Bremsvorrichtung gemäß Patentanspruch 1, einem Lichtbogenschweißbrenner gemäß Patentanspruch 10 und einem Kleinspulen-Lichtbogenschweißbrenner nach Anspruch 11 gelöst.

Weitere vorteilhafte Ausführungsformen der Erfindung sind in den Unteransprüchen angegeben.

Die erfindungsgemäße Bremsvorrichtung ist zum Zusammenwirken mit einer Drahtelektroden-Vorschubeinrichtung eines Lichtbogenschweißbrenners ausgebildet. Der Lichtbogenschweißbrenner verfügt über einen Träger für einen Spulenkörper, der einen Wicklungsbereich zum Aufwickeln der Drahtelektrode und zumindest einen über eine radiale Ausdehnung der Drahtelektrodenwicklungen hinausgehenden Spulenrand aufweist. Die Drahtelektrode ist hierbei im Wicklungsbereich des vorzugsweise auswechselbaren Spulenkörpers aufgewickelt. Am Träger für den Spulenkörper ist ein Halter angelenkt, an dem wiederum Bremsmittel zum Ausüben einer Reibungskraft auf den Spulenrand vorgesehen sind.

Weiterhin ist ein Haltemittel für ein radial nach innen gerichtetes Halten der Drahtelektrodenwicklungen im Wicklungsbereich vorgesehen, welches ein seitliches und möglicherweise unkontrolliertes Verspringen der äußeren Drahtelektrodenwicklungen verhindert. Hierdurch wird eine mechanische Beanspruchung der im Wicklungsbereich aufgewickelten Drahtelektrode effektiv vermieden.

Zudem ermöglicht insbesondere das in Anlagestellung mit dem Spulenrand tretende Bremsmittel eine kontinuierlich gleich bleibende Reibungskraft und somit eine kontinuierlich gleich bleibende Bremswirkung auf den Spulenkörper.

Die erwünschte Funktionalität der Bremsvorrichtung, nämlich ein gleichmäßiges Abbremsen der Spule und ein Halten der äußeren Drahtwicklungen wird hierbei durch zwei separate Komponenten, Bremsmittel und Haltemittel, unabhängig voneinander erreicht. Das Haltemittel wirkt hierbei auf die Drahtwicklungen derart ein, dass ein seitliches, unkontrolliertes Verspringen der äußersten Drahtelektrodenwicklung unterbunden wird, insbesondere wenn aufgrund einer Unterbrechung des Drahtelektrodenvorschubs keine zu einer Abwicklung der Drahtelektrode führende Zugkraft auf den Draht wirkt.

Nach einer ersten Ausführungsform der Erfindung ist der Halter unter Einwirkung zumindest eines ersten Federelements schwenkbar am Träger gelagert. Dieses erste Federelement bewirkt z.B. ein Andrücken der Bremsmittel auf den Spulenrand, wodurch die erwünschte Bremswirkung auf den Spulenkörper erreicht wird.

Nach einer weiteren Ausführungsform der Erfindung ist das Haltemittel als eine drehbare Rolle unter Einwirkung eines Federelementes in Anlage mit der radial äußersten Drahtelektrodenwicklung bringbar. Die Implementierung des Haltemittels als drehbare Rolle, die sich vorzugsweise über den gesamten Bereich zwischen den Spulenrändern des Spulenkörpers erstreckt, ist insbesondere von Vorteil, da hiermit eine Haltefunktion auf die Wicklungen des Spulenkörpers ausgeübt wird.

Die auf das Haltemittel einwirkende Federkraft kann hierbei entweder vom ersten Federelement und/oder von einem weiteren, zweiten Federelement aufgebracht werden. Durch die mittels Federkraft an den Wicklungsbereich angedrückte Rolle wird somit effektiv verhindert, dass insbesondere beim Abwickeln vom Spulenkörper ein seitliches Verrutschen, Verspringen oder Verschieben der äußersten Drahtwicklung stattfindet. Die drehbare Rolle reduziert eine mechanische Beanspruchung der äußersten Wicklung der Drahtelektrode auf ein Minimum.

Nach einer weiteren Ausführungsform der Erfindung sind die Bremsmittel zum Ausüben einer Andruckkraft auf beide Spulenränder des Spulenkörpers ausgebildet. Das zumindest erste Federelement wirkt hierbei vorzugsweise zwischen dem Träger und dem Halter. Somit kann abhängig von der Federkonstanten des Federelementes eine erforderliche Andruckkraft der Bremsmittel auf den Spulenrand erzeugt und eine dementsprechende Reibungskraft auf die beiden Spulenränder und auf den Spulenkörper ausgeübt werden.

Nach einer weiteren bevorzugten Ausführungsform der Erfindung sind die Bremsmittel unter Einwirkung des zweiten Federelements schwenkbar am Halter gelagert. Vorzugsweise dient das zumindest erste Federelement der Ausübung einer Federkraft zwischen dem Träger und dem Halter, während das zweite Federelement ein federgelagertes Verschwenken der Bremsmittel am Halter ermöglicht.

Die Bremsvorrichtung weist somit zumindest zwei schwenkbare Elemente zum Ausüben der Reibungskraft auf den Spulenrand auf. Die Bremsmittel sind typischerweise mittels des zweiten Federelementes schwenkbar am freien Ende des Halters angeordnet, während der Halter selbst an seinem anderen Ende unter Einwirkung des zumindest ersten Federelementes schwenkbar am Träger für den Spulenkörper des Brenners gelagert ist. Die erfindungsgemäße Bremsvorrichtung weist daher einen zumindest zweigliedrigen Bremsarm auf, der aufgrund des schwenkbaren Halters einen relativ großen Verstellweg für die Bremsmittel zur Verfügung stellt, was insbesondere hinsichtlich des Auswechselns des Spulenkörpers von Vorteil ist.

Weithin vorgesehen ist, dass das Haltemittel schwenkbar am Halter gelagert ist. Hierdurch wird insbesondere erreicht, dass das Haltemittel unabhängig von der radialen Ausdehnung des Wicklungsbereichs des Spulenkörpers stets eine Anlage mit zumindest der äußersten Drahtwicklung hat. Die Schwenkbarkeit des Haltemittels ist insofern von Bedeutung, da die radiale Ausdehnung der Wicklungen des Spulenkörpers bei andauerndem Gebrauch des Lichtbogenschweißgerätes stetig abnimmt.

Das Haltemittel ist vorzugsweise am freien Ende des Halters schwenkbar angeordnet. Insbesondere können die Brems- und das Haltemittel an gegenüberliegenden Seiten des Halters angeordnet sein, so dass das zweite Federelement mit beiden, sowohl den Bremsmitteln als auch mit dem Haltemittel, in Wirkverbindung steht. Die Bremsmittel sowie das Haltemittel können hierbei um eine gemeinsame oder aber auch um zwei verschiedene, vorzugsweise parallel ausgerichtet, Schwenkachsen verschwenkbar angeordnet sein. Zudem kann auch vorgesehen sein, dass zur Anlenkung der Bremsmittel am Halter und zur Anlenkung des Haltemittels am Halter jeweils ein oder mehrere separate Federelemente Verwendung finden.

Vorzugsweise ist das Haltemittel unter Einwirkung des zweiten Federelements an dem Halter gelagert, so dass eine Anlage mit zumindest der äußersten Drahtwicklung stets gegeben ist.

Nach einer weitere Ausführungsform der Erfindung ist es vorgesehen, dass die durch das Bremsmittel auf den Spulenrand ausübbbare Bremswirkung beziehungsweise Reibungskraft durch das zumindest eine Federelement auf die Eigenschaften der Drahtvorschubeinrichtung abgestimmt ist. Durch diese Abstimmung soll zum einen verhindert werden, dass die Reibungskraft durch den Drahtvorschub bewirkter Drahtvorschub beeinträchtigt wird. Zum anderen bewirkt die Abstimmung über Art und Beschaffenheit, insbesondere der Federkonstanten des zumindest einen Federelementes, dass stets eine erforderliche Reibungskraft auf die Drahtelektrodenspule im Betrieb des Lichtbogenschweißgerätes ausgeübt wird. Durch diese Reibungskraft wird somit stets gewährleistet, dass bei einem Abschalten des Schweißgerätes beziehungsweise bei einem Unterbrechen des Schweißvorganges, der mit einem Abstoppen des Spulenkörpers und des Vorschubs einhergeht, ein Nachlauf des Spulenkörpers verhindert wird.

Nach einer weiteren bevorzugten Ausgestaltung der Erfindung sind die Bremsmittel einstückig als eine am freien Ende des Halters schwenkbare Platte ausgebildet, die als Bremsschuh auf beide Spulenränder des Spulenkörpers einwirkt.

Weiterhin ist vorgesehen, dass die Bremsmittel eine an die Rundung des Spulenkörpers angepasste Kontur aufweisen. Folglich verläuft die Geometrie der Bremsmittel leicht abgerundet, so dass sie in Anlagestellung mit dem Spulenrand zur Entfaltung einer möglichst großen Reibungskraft eine maximale Anlagefläche aufweisen.

Nach einem weiteren Aspekt betrifft die Erfindung einen Lichtbogenschweißbrenner mit einer erfindungsgemäßen Bremsvorrichtung der oben beschrieben Art.

Die erfindungsgemäße Bremsvorrichtung ist insbesondere für den Einsatz in Kleinspulen-Schweißbrennern vorgesehen. Die Erfindung betrifft daher auch Kleinspulen-Schweißgeräte mit einer erfindungsgemäßen Bremsvorrichtung der oben beschriebenen Art.

### Ausführungsbeispiel

Weitere Ziele, Vorteile und Anwendungsmöglichkeiten der vorliegenden Erfindung ergeben sich aus der nachfolgenden Beschreibung des Ausführungsbeispiels anhand der Zeichnungen.

Es zeigen:
- Figur 1: eine perspektivische Ansicht eines Kleinspulen-Schweißgerätes mit Drahtspulenbremsvorrichtung,
- Figur 2: eine perspektivische Darstellung des Trägers für den Spulenkörper,
- Figur 3: eine weitere perspektivische Ansicht des Spulenkörperträgers mit abgenommener Schutzhaube,
- Figur 4: eine perspektivische Ansicht der an einen Spulenkörper angreifenden Bremsvorrichtung,
- Figur 5: eine Explosionsdarstellung des Spulenkörperträgers mit Schutzhaube und
- Figur 6: eine Seitenansicht des Spulenkörperträgers mit Bremsvorrichtung.

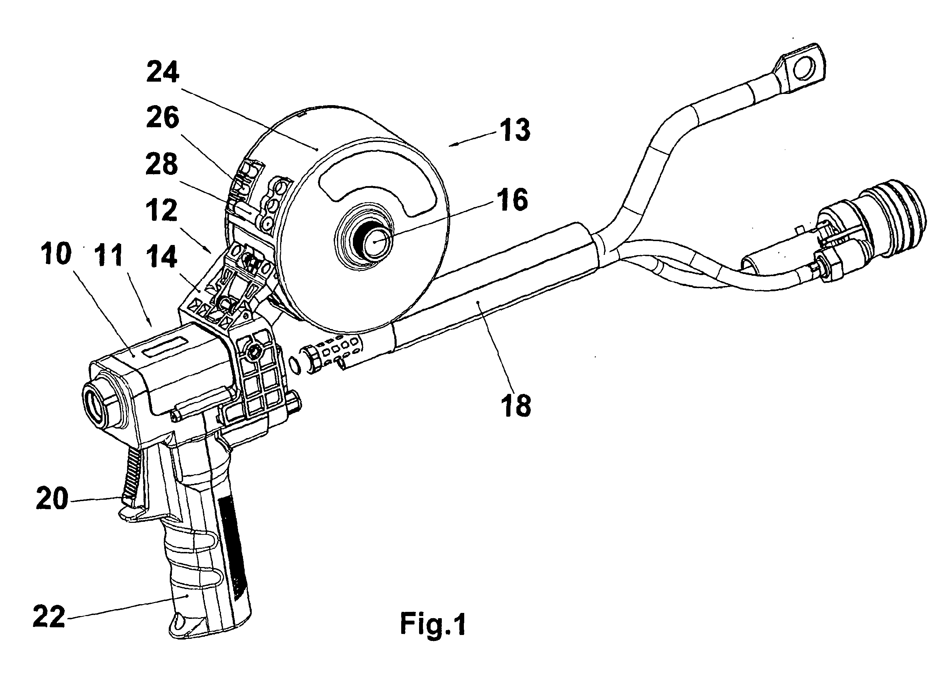

Figur 1 zeigt eine perspektivische Darstellung eines Kleinspulen-Schweißgerätes 10, welches über einen an einem Spulenträger 14 befestigten Spulenkörper 13 verfügt. Im Bereich einer Befestigungsschraube 16 ist der Spulenkörper 13 auf eine Achse aufschiebbar, die am Spulenträger 14 befestigt ist. Zudem ist der Spulenkörper 13 mittels einer Schutzhaube 24 abgedeckt.

Das Kleinspulen-Schweißgerät 10 verfügt ferner im Bereich seines Griffs 22 über ein Betätigungsmittel 20 zur Inbetriebnahme des Brenners und zur Kontrolle des Schweißbetriebs. Insbesondere ist vorgesehen, dass bei Betätigung des als Knopf oder Wippschalters ausgebildeten Betätigungsmittels 20 der elektromotorisch angetriebene Vorschub 11 für die Drahtelektrode aktiviert und die Drahtelektrode durch die Vorschubeinrichtung vom Spulenkörper 13 abgewickelt wird.

Das Kleinspulen-Schweißgerät 10 ist ferner dafür vorgesehen, mit einer Zuführung 18 verbunden zu werden, die die Versorgung mit Strom und/oder Schutzgasen gewährleistet.

Weiterhin weist die Schutzhaube 24 des Spulenkörpers 13 eine Halterung 26 auf, die der Aufnahme etwaiger Ersatzkontaktdüsen 28 dient.

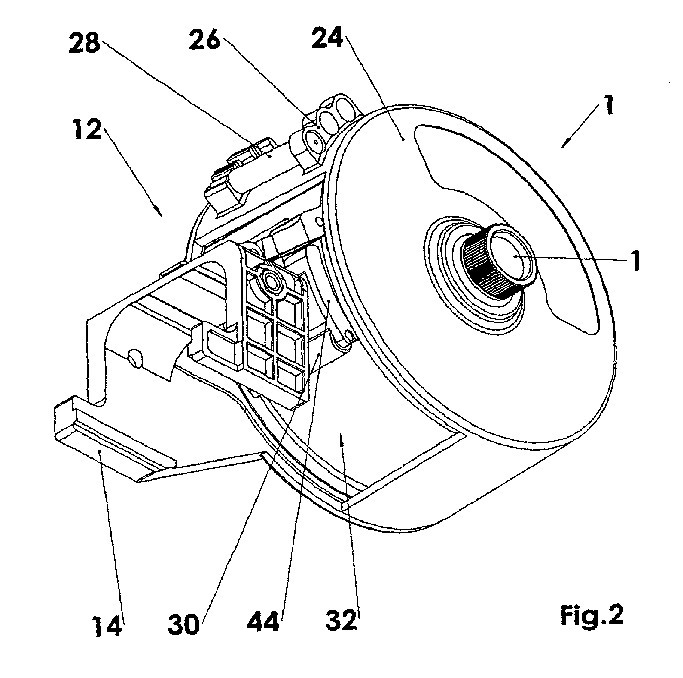

Figur 2 zeigt eine perspektivische Darstellung des Spulenkörperträgers 14 von der Unterseite in einem vom Kleinspulen-Schweißgerät 10 demontierten Zustand. Der Spulenkörperträger 14 kann beispielsweise von hinten auf den Kleinspulenschweißbrenner 10 aufgesteckt und gegebenenfalls mit diesem verschraubt werden. Die Schutzhaube 24 dient als Abdeckung für den vom Spulenträger 14 gehaltenen Spulenkörper 13. Insbesondere im Bereich der Bremsvorrichtung 12 ist die Schutzhaube 24 nicht durchgehend ausgebildet, so dass die Bremsvorrichtung 12 direkt auf den Spulenkörper 13 einwirken kann. Vorzugsweise gibt die Schutzhaube 24 an der Unterseite, d. h. an der Seite, die der Zuführung 18 zugewandt ist, die Wicklungen 32 der auf den Spulenkörper 13 aufgewickelten Drahtelektrode frei.

In Figur 2 ist zudem ansatzweise das als Andruckrolle 30 ausgebildete Haltemittel zu sehen, welches über die gesamte Breite des Wicklungsbereichs 32 des Spulenkörpers 13 einem Verspringen, seitlichem Verschieben oder dergleichen der äußersten Drahtwicklung entgegenwirkt.

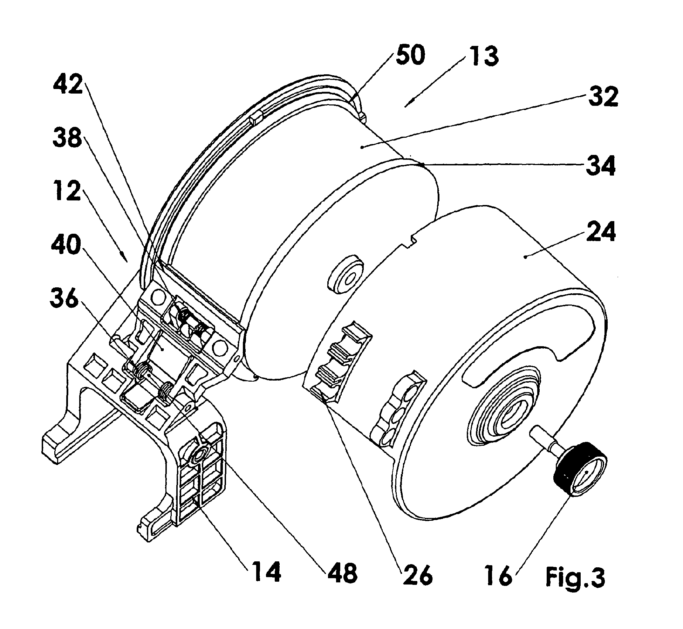

Figur 3 zeigt eine perspektivische Ansicht des Spulenträgers 14 mit einem daran angeordneten Spulenkörper 13 in einer Explosionsdarstellung, bei der eine demontierte Schutzhaube 24 die mit dem Spulenkörper 13 in Wirkverbindung stehende Bremsvorrichtung 12 freigibt. Es ist deutlich zu erkennen, dass der Spulenkörper 13 über einen Wicklungsbereich 32 verfügt, der seitlich an einen Spulenrand 34, 50 angrenzt. Die radiale Ausdehnung des Spulenrands bzw. seiner stirnseitigen Scheiben 34, 50 geht hierbei über die radiale Ausdehnung der Wicklungen im Wicklungsbereich 32 hinaus.

Das plattenförmig ausgebildete Bremselement 42 der Bremsvorrichtung 12 ist somit in Anlagestellung mit dem Spulenrand 34, 50 und übt durch das Federelement 36 und den Halter 40 eine Reibungskraft auf den Spulenrand 34, 50 aus. Hierdurch ist eine stets gleich bleibende Bremswirkung auf den Spulenrand 34, 50 und somit auf den gesamten Spulenkörper 13 im Betrieb des Brenners gewährleistet.

Die Bremsvorrichtung 12 kann ebenso zweigliedrig ausgebildet sein. Der Halter 40 ist an einer ersten Schwenkachse 48 unter Einwirkung der Federkraft des Federelementes 36 schwenkbar am Träger 14 angeordnet. In ähnlicher Weise ist das als Bremsschuh ausgebildete Bremselement 42 über die Schwenkachse 46 und mittels des Federelements 38 schwenkbar am Halter angeordnet.

Hiermit wird ein direktes Einwirken der Bremsvorrichtung 12 auf den Spulenrand 34, 50 realisiert. Zudem wird durch die zweifach schwenkbare Lagerung des Halters 40 beziehungsweise des Bremselements 42 prinzipiell ermöglicht, Spulenkörper 13 mit unterschiedlichem Durchmesser am Träger 14 anzubringen. Mittels des ersten Federelementes 36 und dem Halter 40 wird das Bremselement 42 stets in Anlage mit dem Spulenrand 34, 50 gebracht.

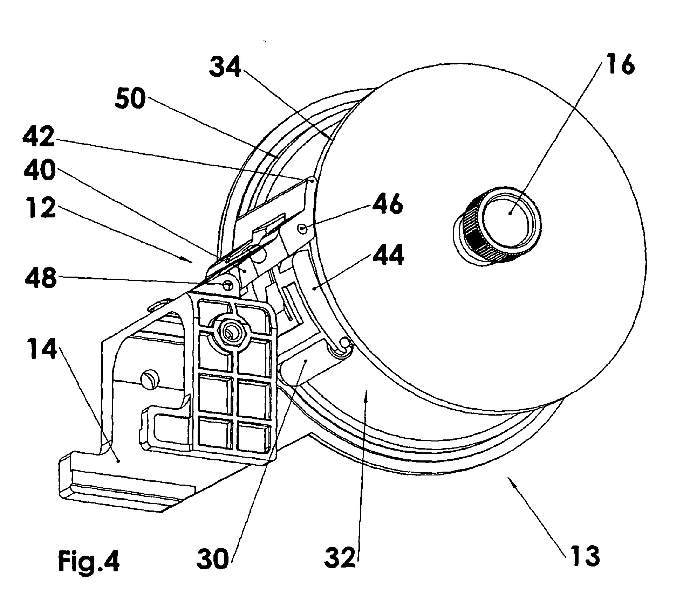

Figur 4 zeigt eine weitere perspektivische Darstellung des Halters 14 bei entfernter Schutzhaube 24. Hierbei sind insbesondere die beiden Schwenkachsen 48, 46 zu sehen, an denen der Halter 40 am Träger 14 angelenkt und das Bremselement 42 schwenkbar am Halter 40 gelagert ist. Zudem zeigt Figur 4 das sich in entgegensetzter Richtung zum Bremselement 42 erstreckende Halteteil 44, an dessen freien Ende die Halterolle 30 gelagert ist. Vorzugsweise ist das Halteteil 44 mit Hilfe des zweiten Federelements 38 mit der äußersten Wicklung 32 der aufgewickelten Drahtelektrode bringbar.

Die schwenkbare Lagerung des Halters 40 um die Schwenkachse 48 ermöglicht des Weiteren ein Wegklappen des gesamten Bremsmechanismusses vom Spulenkörper 13. Hierdurch wird insbesondere ein Auswechseln des Spulenkörpers 13 erleichtert. Die Ausgestaltung des freien Endes des Halteteils 44 als drehbare Rolle 30 birgt den Vorteil, dass eine Seitwärtsbewegung der äußersten Spulenwicklungen und ein eventuell damit verbundenes Verspringen der äußersten Spulenwicklung effektiv verhindert wird.

Das als Bremsschuh 42 ausgebildete Bremselement hingegen wirkt lediglich auf die den Wicklungsbereich 32 begrenzenden Spulenränder 34, 50, deren radiale Ausdehnung beim Abwickeln der Windungen 32 konstant bleibt, so dass eine konstante Bremswirkung der Bremsvorrichtung 12 stets gewährleistet ist. Zudem weist das Bremselement 42 eine leichte, dem Radius des Drahtspulenrands 34, 50 angepasste Rundung auf, um mit dem Drahtspulenrand 34, 50 eine möglichst große Reibungsfläche zu bilden.

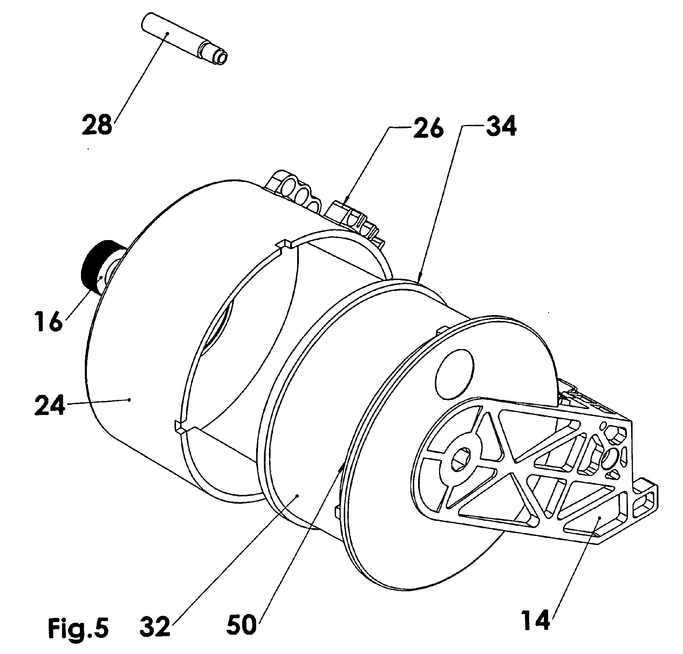

Figur 5 zeigt eine der Figur 3 entsprechende Explosionsdarstellung des Spulenkörperträgers 14 mit einem daran befestigten Spulenkörper 13 bei demontierter Schutzhaube 24. Zusätzlich ist hier eine Ersatzkontaktdüse 28 abgebildet, die an der an der Außenwandung der Schutzhaube 24 angeordneten Halterung 26 gehalten werden kann. Dieser Ansicht ist insbesondere der zur Achse des Spulenkörpers 13 hinführende Schenkel des Spulenträgers 14 zu sehen.

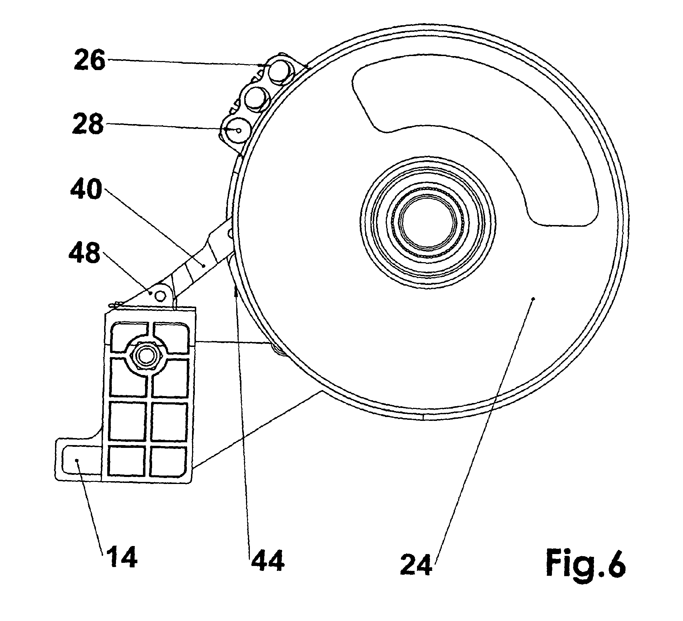

Figur 6 zeigt ferner eine seitliche Ansicht des Spulenkörperträgers 14 mit dem aus Halter 40 und Bremselement 42 bestehenden Bremsvorrichtung 12. Dieses sich im Wesentlichen in azimutaler Richtung erstreckende Bremselement 42 sowie das Halteteil 44 sind hier nur ansatzweise erkennbar.

### Bezugszeichenliste

- 10: Lichtbogenschweißbrenner, Kleinspulenschweißbrenner
- 11: Vorschubeinrichtung
- 12: Bremsvorrichtung
- 13: Spulenkörper
- 14: Spulenträger
- 16: Befestigungsschraube
- 18: Zuführung
- 20: Betätigungsmittel
- 22: Griff
- 24: Schutzhaube
- 26: Halterung
- 28: Kontaktdüse
- 30: Haltemittel, Halterolle
- 32: Drahtwicklung
- 34: Drahtspulenrand
- 36: Federelement
- 38: Federelement
- 40: Halter
- 42: Bremselement
- 44: Halteteil
- 46: Schwenkachse
- 48: Schwenkachse
- 50: Drahtspulenrand

## Patentansprüche

1. Bremsvorrichtung für eine Drahtelektrodenvorschubeinrichtung (11) eines Lichtbogenschweißbrenners (10), mit einem Träger (14) für einen Spulenkörper (13), der einen Wicklungsbereich (32) zum Aufwickeln der Drahtelektrode und zumindest einen über eine radiale Ausdehnung der Drahtelektrodenwicklungen hinausgehenden Spulenrand (34, 50) aufweist, **dadurch gekennzeichnet, dass** an dem Träger (14) ein Halter (40) angelenkt ist, an dem seinerseits in Anlagestellung mit dem Spulenrand (34, 50) tretende Bremsmittel (42) zum Ausüben einer Reibungskraft und ein Haltemittel (30) für ein radial nach innen gerichtetes Halten der Drahtelektrodenwicklungen im Wicklungsbereich (32) vorgesehen sind.

2. Bremsvorrichtung nach Anspruch 1, **dadurch gekennzeichnet, dass** der Halter (40) unter Einwirkung zumindest eines ersten Federelements (36) schwenkbar am Träger (14) gelagert ist.

3. Bremsvorrichtung nach Anspruch 1 oder 2, **dadurch gekennzeichnet, dass** das Haltemittel als eine drehbare Rolle (30) ausgebildet ist, welche unter Einwirkung eines Federelements (36, 38) in Anlage mit der radial äußersten Drahtelektrodenwicklung bringbar ist.

4. Bremsvorrichtung nach einem der Ansprüche 1 bis 3, **dadurch gekennzeichnet, dass** Haltemittel unter Einwirkung eines zweiten Federelements (38) in Anlage mit der radial äußersten Drahtelektrodenwicklung bringbar ist.

5. Bremsvorrichtung nach Anspruch 1 oder 4, **dadurch gekennzeichnet, dass** die Bremsmittel (42) zum Ausüben einer Bremskraft auf beide Spulenräder (34, 50) ausgebildet sind.

6. Bremsvorrichtung nach einem der Ansprüche 1 bis 5, **dadurch gekennzeichnet, dass** die Bremsmittel (42) schwenkbar am Halter (40) gelagert sind.

7. Bremsvorrichtung nach einem der Ansprüche 1 bis 6, **dadurch gekennzeichnet, dass** das Haltemittel (30) schwenkbar am Halter (40) gelagert ist.

8. Bremsvorrichtung nach einem der Ansprüche 1 bis 7, **dadurch gekennzeichnet, dass** die durch das Bremsmittel (42) auf den wenigstens einen Spulenrand (34, 50) ausübbare Reibungskraft, insbesondere mittels des ersten und/oder zweiten Federelements (36, 38), auf die Drahtvorschubeinrichtung (11) abgestimmt ist.

9. Bremsvorrichtung nach einem der Ansprüche 1 bis 8, **dadurch gekennzeichnet, dass** die Bremsmittel (42) einstückig als Platte ausgebildet sind.

10. Bremsvorrichtung nach einem der Ansprüche 1 bis 9, **dadurch gekennzeichnet, dass** die Bremsmittel (42) eine an die Rundung des Spulenkörpers (13) angepasste Kontur aufweisen.

11. Schutzgasschweißbrenner mit einer Bremsvorrichtung (12) für eine Drahtelektrodenvorschubeinrichtung (11) nach einem der Ansprüche 1 bis 10.

12. Kleinspulen-Schweißbrenner mit einer Bremsvorrichtung (12) für eine Drahtelektrodenvorschubeinrichtung (11) nach einem der Ansprüche 1 bis 10.

## Claims

1. Braking device for an electrode wire advancing device (11) of an arc welding torch (10), comprising a carrier (14) for a coil body (13), which has a winding region (32) for winding up the electrode wire and at least one coil edge (34, 35) protruding beyond a radial extent of the electrode wire windings, **characterised in that** pivotably mounted at the carrier (14) is a holder (40), at which in turn are provided braking means (42), which come into contact setting with the coil edge (34, 50), for exerting a friction force and a holding means (30) for a radially inwardly directed holding of the electrode wire windings in the winding region (32).

2. Braking device according to claim 1, **characterised in that** the holder (40) is mounted at the carrier (14) to be pivotable under the action of at least one first spring element (36).

3. Braking device according to claim 1 or 2, **characterised in that** the holding means is constructed as a rotatable roller (30) which can be brought under the action of a spring element (36, 38) into contact with the radially outermost electrode wire winding.

4. Braking device according to one of claims 1 to 3, **characterised in that** holding means can be brought into contact with the radially outermost electrode wire winding under the action of a second spring element (38).

5. Braking device according to claim 1 or 4, **characterised in that** the braking means (42) are constructed for exerting a braking force on both coil edges (34, 50).

6. Braking device according to one of claims 1 to 5, **characterised in that** the braking means (42) are pivotably mounted at the holder (40).

7. Braking device according to one of claims 1 to 6, **characterised in that** the holding means (30) is pivotably mounted at the holder (40).

8. Braking device according to one of claims 1 to 7, **characterised in that** the friction force able to be exerted by the braking means (42) on the at least one coil edge (34, 50), particularly by means of the first and/or second spring element (36, 38), is matched to the wire advancing device (11).

9. Braking device according to one of claims 1 to 8, **characterised in that** the braking means (42) are integrally constructed as a plate.

10. Braking device according to one of claims 1 to 9, **characterised in that** the braking means (42) have a contour adapted to the rounding of the coil body (13).

11. Protective gas welding torch with a braking device (12) for an electrode wire advancing device (11) according to one of claims 1 to 10.

12. Small-coil welding torch with a braking device (12) for an electrode wire advancing device (11) according to one of claims 1 to 10.

## Revendications

1. Dispositif de freinage pour un dispositif d'avance de fil-électrode (11) d'un chalumeau de soudage à l'arc (10), comportant un support (14) pour un corps de bobine (13) qui présente une zone d'enroulement (32) servant à enrouler le fil-électrode et au moins une joue de bobine (34, 50) qui va au-delà d'une extension radiale des enroulements de fil-électrode, **caractérisé en ce que** sur le support (14) est articulé un porte-électrode (40), sur lequel sont prévus des moyens de freinage (42) appuyant de son côté en position d'installation avec la joue de bobine (34, 50) pour exercer une force de frottement et un moyen de retenue (30) pour arrêter de manière dirigée radialement vers l'intérieur les enroulements de fil-électrode dans la zone d'enroulement (32).

2. Dispositif de freinage selon la revendication 1, **caractérisé en ce que** le porte-électrode (40) est logé sur le support (14) de manière à pouvoir pivoter sous l'effet au moins d'un premier élément de ressort (36).

3. Dispositif de freinage selon la revendication 1 ou 2, **caractérisé en ce que** le moyen de retenue est réalisé sous la forme d'un rouleau (30) rotatif, lequel peut être amené sous l'effet d'un élément de ressort (36, 38) en butée avec l'enroulement de fil-électrode radialement le plus extrême.

4. Dispositif de freinage selon l'une quelconque des revendications 1 à 3, **caractérisé en ce qu'**un moyen de retenue peut être amené sous l'effet d'un second élément de ressort (38) en butée avec l'enroulement de fil-électrode radialement le plus extrême.

5. Dispositif de freinage selon la revendication 1 ou 4, **caractérisé en ce que** les moyens de freinage (42) servant à exercer une force de freinage sont réalisés sur les deux joues de bobine (34, 50).

6. Dispositif de freinage selon l'une quelconque des revendications 1 à 5, **caractérisé en ce que** les moyens de freinage (42) sont logés sur le porte-électrode (40) de manière à pouvoir pivoter.

7. Dispositif de freinage selon l'une quelconque des revendications 1 à 6, **caractérisé en ce que** le moyen de retenue (30) est logé sur le porte-électrode (40) de manière à pouvoir pivoter.

8. Dispositif de freinage selon l'une quelconque des revendications 1 à 7, **caractérisé en ce que** la force de freinage pouvant être exercée par le moyen de freinage (42) sur au moins une joue de bobine (34, 50), plus particulièrement à l'aide du premier et/ou second élément de ressort (36, 38), est adaptée au dispositif d'avance du fil (11).

9. Dispositif de freinage selon l'une quelconque des revendications 1 à 8, **caractérisé en ce que** les moyens de freinage (42) sont réalisés d'un seul tenant sous la forme d'une plaque.

10. Dispositif de freinage selon l'une quelconque des revendications 1 à 9, **caractérisé en ce que** les moyens de freinage (42) présentent un contour adapté à l'arrondi du corps de bobine (13).

11. Chalumeau de soudage à l'arc sous protection gazeuse doté d'un dispositif de freinage (12) pour un dispositif d'avance de fil-électrode (11) selon l'une quelconque des revendications 1 à 10.

12. Chalumeau de soudage utilisant des petites bobines comportant un dispositif de freinage (12) pour un dispositif d'avance de fil-électrode (11) selon l'une quelconque des revendications 1 à 10.
